# DEMANDE DE BREVET EUROPEEN

(11) **EP 4 657 494 A1**
(43) Date de publication de la demande: **03.12.2025**
(21) Numéro de dépôt: 25178945.9
(22) Date de dépôt: 27.05.2025
(51) Int. Cl.: H01J 49/04, H01J 49/14, G01N 1/28, G01N 23/2258

(54) **PORTE-ÉCHANTILLON POUR DÉCOUPE ET ANALYSE IN SITU PAR SPECTROMÉTRIE DE MASSE DES IONS SECONDAIRES**

(30) Priorité: 29.05.2024 FR 2405546
(71) Demandeur: Commissariat à l'Energie Atomique et aux Energies Alternatives, 75015 Paris (FR)
(72) Inventeur: SEYDOUX, Claire, 38054 Grenoble cedex 09 (FR); BARNES, Jean-Paul, 38054 Grenoble cedex 09 (FR)
(74) Mandataire: Hautier IP

(57) **Abrégé**

L'invention concerne un dispositif (1) porte-échantillon pour découpe d'un échantillon (3) par un faisceau d'ions (200) et analyse in situ par spectrométrie de masse des ions secondaires, le dispositif (1) comprenant un module pivot (10) comprenant deux surfaces d'appui (S1, S2) définissant un angle de basculement α, le dispositif (3) étant configuré pour être basculé en rotation d'une surface d'appui à une autre entre les configurations de découpe et d'analyse, le dispositif (1) comprenant en outre un module de maintien (11) comprenant un logement (110) de l'échantillon (3), et une portion de masquage (111) configurée pour, dans la configuration de découpe, masquer en partie l'échantillon (3) au faisceau d'ions (200).

## Description

### DOMAINE TECHNIQUE

La présente invention concerne le domaine de la préparation d'échantillon et analyse in situ par spectrométrie de masse des ions secondaires. Elle trouve pour application particulièrement avantageuse le domaine de l'analyse in situ par spectrométrie de masse des ions secondaires à temps de vol, et en particulier en conditions dites cryogéniques.

### ETAT DE LA TECHNIQUE

L'analyse par spectrométrie de masse des ions secondaires (couramment abrégé SIMS, de l'anglais *Secondary lon Mass Spectrometry*) est une technique d'analyse de surface couramment utilisée. Par cette technique, une surface de l'échantillon à analyser est bombardée avec un faisceau d'ions. L'échantillon est alors pulvérisé, et une partie de la matière pulvérisée est ionisée. Ces ions secondaires sont alors accélérés vers un spectromètre de masse qui permettra de mesurer des informations relatives à la composition chimique de la surface de l'échantillon. La technique dite de « temps de vol » (abrégé TOF-SIMS, de l'anglais *time of flight*)*,* peut être utilisée pour cela.

Afin d'obtenir des informations chimiques dans le volume de l'échantillon, il peut être intéressant de procéder en amont de l'analyse à la découpe de l'échantillon pour exposer une surface en coupe de l'échantillon, de sorte à analyser non plus un volume mais une surface. C'est la surface en coupe se retrouvant exposée qui est alors analysée par SIMS.

La préparation de l'échantillon est souvent une étape limitante en ce qu'elle requiert parfois une grande précision manuelle et peut endommager ou modifier l'échantillon. Dans le cas d'échantillons biologiques par exemple, la préparation est souvent délicate car les échantillons ne sont pas stables sous ultra-haut-vide, sauf à des températures cryogéniques. Réaliser la préparation in situ, c'est-à-dire dans le spectromètre dans lequel se déroulera l'analyse, offre de nombreux avantages car cela évite des transferts qui peuvent eux aussi endommager l'échantillon.

Pour cela, le spectromètre comprend un canon à faisceau d'ions configuré pour découper ou abraser l'échantillon. Les méthodes existantes pour réaliser des coupes in-situ s'effectuent généralement à l'aide d'un faisceau d'ions focalisé (couramment abrégé FIB, de l'anglais *focussed ion beam*)*.* Ces faisceaux d'ions peuvent être de diffèrent types mais les plus communément utilisé sont le Ga⁺, Bi+ et les canons à clusters d'ions gazeux (couramment abrégé GCIB, de l'anglais *gas cluster ion beam*)*.* Elles permettent d'abraser l'échantillon sur une zone petite (maximum une centaine de microns). Au-delà de cette profondeur, et compte tenu des dispositions relatives entre le canon à faisceau d'ions pour la découpe et l'analyseur SIMS, une réorientation de l'échantillon est demandée car l'éjection des ions pour l'analyse SIMS a une faible profondeur de champ (typiquement d'environ 10 à 100 µm).

Le document Christian Schneider, Harald Weigand, Marcus Rohnke; Improving SIMS imaging of FIB bevel cuts with an elaborate sample holder. J. Vac. Sci. Technol. B 1 May 2018; 36 (3): 03F101, décrit un support d'échantillon motorisé pour analyse TOF SIMS. Le porte échantillon est utilisé pour faire in situ une gravure FIB. Le porte-échantillon comprend un moteur électrique et de plusieurs déflexions pour régler la position de l'échantillon entre une configuration de découpe et une configuration d'analyse. Cette solution reste néanmoins complexe à mettre en œuvre, peut endommager l'échantillon et reste limitée en termes d'analyse SIMS.

Le document JP2008039521 A décrit un dispositif d'analyse de micro-régions utilisant un faisceau d'ions focalisé (FIB) pour réaliser une coupe dans un échantillon et effectuer une analyse des ions secondaires. Ce système reste toutefois limité.

Un objet de la présente invention est donc de proposer une solution améliorée pour la découpe d'un échantillon et l'analyse in-situ par spectrométrie de masse des ions secondaires, et notamment pour analyse in-situ par spectrométrie de masse des ions secondaires à temps de vol (TOF-SIMS).

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un dispositif de porte-échantillon pour découpe d'au moins un échantillon par un faisceau d'ions et analyse in situ par spectrométrie de masse des ions secondaires, présentant une première configuration dite « de découpe » dans laquelle l'échantillon est destiné à être dans une première position, et une deuxième configuration dite « d'analyse » dans laquelle l'échantillon est destiné à être dans une deuxième position, la première position étant distincte de la deuxième position, le dispositif étant configuré de façon à entrainer en rotation l'échantillon entre la première position et la deuxième position lors du passage entre la configuration de découpe et la configuration d'analyse.

Avantageusement, le dispositif comprend :
- un module pivot comprenant au moins deux surfaces d'appui définissant entre elles, au niveau d'un axe de rotation, un angle de basculement α, le dispositif étant en appui sur une desdites surfaces d'appui dans la configuration de découpe, et le dispositif étant en appui sur une autre desdites surfaces d'appui dans la configuration d'analyse, le dispositif étant configuré pour être basculé en rotation autour de l'axe de rotation lors du passage entre la configuration de découpe et la configuration d'analyse,
- un module de maintien comprenant :
   ∘ un logement configuré pour accueillir l'échantillon,
   ∘ une portion de masquage configurée pour, dans la configuration de découpe, masquer en partie l'échantillon au faisceau d'ions, lorsque l'échantillon est disposé dans le logement.

Le logement avec la portion de masquage permet une découpe de l'échantillon par un faisceau de clusters d'ions gazeux (plus communément désigné par l'acronyme GCIB, de l'anglais Gaz Cluster Ion Beam). Un GCIB est moins précis en découpe, car le faisceau est plus large et plus diffus. Le GCIB est toutefois plus rapide qu'un FIB sur des échantillons organiques et biologiques et occasionne moins de fragmentation moléculaire en surface de l'échantillon. Le dispositif permet ainsi une découpe plus rapide et de meilleure qualité d'un échantillon en trois dimensions et non nécessairement uniquement d'empilements multicouches planaires, comme c'est le cas dans les solutions conventionnelles. Le porte-échantillon est en outre compatible avec des échantillons extrêmement rugueux pour lesquels il est difficile d'effectuer une coupe plane.

Le basculement de la platine porte-échantillon étant limité, les deux surfaces d'appui permettent ici de basculer in situ par pivotement du dispositif entre la position de découpe et la position d'analyse de façon simple, robuste et fiabilisée. La manipulation de l'échantillon découpée est réduite tout en permettant un placement reproductible grâce aux deux surfaces d'appui. Le porte-échantillon permet de réaliser une coupe en biais puis de la réorienter dans l'instrument, y compris dans un instrument qui n'offre pas un pivotement de la platine porte-échantillon suffisant. Les conditions d'abrasion peuvent être améliorées tout en optimisant l'extraction des ions secondaires analysés. Les artefacts sont ainsi limités et le signal mesuré est augmenté.

Le dispositif porte-échantillon est ainsi rendu compatible avec des conditions de découpe et d'analyse in situ ambiantes, mais aussi avec des conditions de découpe et d'analyse in situ dites « cryogéniques », ce qui est particulièrement avantageux pour des échantillons biologiques et/ou organiques, pouvant fréquemment être en trois dimensions. Le risque de prise en glace d'un porte-échantillon motorisé est limité. Les conditions cryogéniques permettent en outre de minimiser la modification de la chimie de surface des échantillons.

L'angle de basculement peut en outre être adapté à façon selon la fabrication du porte échantillon, par exemple en fonction des configurations d'instruments et du placement relatifs des canons de découpe et d'analyse.

Un deuxième aspect concerne un instrument d'analyse in situ par spectrométrie de masse des ions secondaires comprenant un canon à faisceau d'ions, de préférence un canon à clusters d'ions gazeux, l'instrument comprenant en outre :
- une platine porte-échantillon,
- le dispositif porte-échantillon selon le premier aspect, disposé sur la platine porte-échantillon,
- un organe dit de basculement, configuré pour basculer le dispositif porte-échantillon entre la configuration de découpe et la configuration d'analyse.

Un troisième aspect concerne un procédé de découpe et d'analyse in situ par spectrométrie de masse des ions secondaires d'un échantillon, comprenant :
- une disposition d'un échantillon dans un dispositif de porte-échantillon comprenant un module de maintien, le module de maintien comprenant un logement configuré pour accueillir l'échantillon,
- le dispositif comprenant un module pivot comprenant au moins deux surfaces d'appui définissant entre elles, au niveau d'un axe de rotation, un angle de basculement α, une disposition du dispositif logeant l'échantillon sur la platine porte-échantillon d'un instrument d'analyse in situ par spectrométrie de masse des ions secondaires, de sorte que le dispositif est dans une première configuration dite de découpe dans laquelle le dispositif en appui une desdites surfaces d'appui,
- dans la configuration de découpe, une découpe de l'échantillon par un faisceau d'ions, dans laquelle l'échantillon dans le logement est en partie masqué au faisceau d'ions par une portion de masquage du module de maintien, de façon à exposer après découpe une surface en coupe de l'échantillon,
- un passage du dispositif de la configuration de découpe à une deuxième configuration dite d'analyse, par rotation du dispositif autour de l'axe de rotation A1 de façon à mettre en appui le dispositif sur une autre desdites surfaces d'appui,
- une analyse par spectrométrie de masse des ions secondaires de la surface en coupe exposée de l'échantillon.

Selon un quatrième aspect, on prévoit un procédé de fabrication du dispositif porte-échantillon selon le premier aspect, comprenant un usinage, de préférence par électroérosion, de façon à former le module pivot présentant son angle de basculement, le logement et la portion de masquage.

Selon un exemple, le procédé comprend en outre un polissage d'une face du dispositif sur laquelle est disposée le logement, de façon à définir une profondeur du logement.

Selon un exemple, le procédé comprend en outre un usinage de l'arête de la portion de masquage, de préférence par faisceau d'ions plasma focalisé (en anglais *Plasma Focused Ion Beam).*

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A à 1D représentent des étapes de découpe et d'analyse du procédé mettant en oeuvre le dispositif porte-échantillon, selon un exemple de réalisation.
Les figures 2 à 5 représentent une vue en coupe longitudinale du dispositif porte-échantillon dans la configuration de découpe, selon plusieurs exemples de réalisation.
La figure 6 représente une variante de l'organe de basculement du dispositif porte-échantillon, selon un exemple de réalisation distinct de ceux représentés dans les figures 2 à 5.
Les figures 7A et 7B représentent une vue en coupe longitudinale du dispositif porte-échantillon dans la configuration de découpe, selon deux exemples de réalisation dans lequel le module de maintien comprend plusieurs logements.
Les figures 8A à 8C représentent une vue en coupe transversale du dispositif porte-échantillon, selon trois exemples de réalisation particuliers du logement du module de maintien.
Les figures 9A à 9C représentent une vue en coupe transversale du dispositif porte-échantillon, selon trois exemples de réalisation particuliers de l'arête du module de maintien.
Les figures 10A et 10B représentent une vue en coupe longitudinale du dispositif porte-échantillon, selon deux exemples de réalisation dans lequel le dispositif comprend un organe configuré pour modifier au moins une profondeur du logement et/ou au moins une hauteur de l'arête.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives entre le dispositif porte-échantillon, l'instrument et l'échantillon ne sont pas nécessairement représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, la portion de masquage comprend au moins une surface destinée à être disposée de façon oblique par rapport au faisceau d'ions pour délimiter au moins une arête masquant en partie l'échantillon au faisceau d'ions. Le masquage de l'échantillon est ainsi fait par un relief ponctuel selon la direction de propagation du faisceau d'ions de découpe. Le risque de dépôt de matériau provenant de la portion de masquage est ainsi limité. L'effet de rideau lors de la découpe est en outre limité. La qualité de la découpe, et donc de l'analyse subséquente, est ainsi améliorée.

Selon un exemple, le dispositif porte-échantillon est en métal.

Selon un exemple, l'angle de basculement α est compris entre 120° et 160°, de préférence entre 125° et 145°, de préférence est sensiblement égal à 135°. Lors du développement de l'invention, il a été mis en évidence que cette gamme d'angle était particulièrement adaptée pour obtenir une découpe de qualité, et notamment par GCIB, et ensuite dans la configuration d'analyse pour optimiser l'extraction des ions secondaires et leur analyse. Cette angle peut varier selon la configuration de l'instrument. Cet angle peut être à ajusté en fonction de l'angle d'incidence du faisceau d'ions pour la découpe.

Selon un exemple, le module pivot comprend un premier bras comprenant une première surface d'appui et un deuxième bras comprenant une deuxième surface d'appui.

Selon un exemple, le module de maintien est disposé sur le deuxième bras, le module de maintien étant en outre configuré de sorte que le logement et la portion de masquage sont surélevés par rapport au deuxième bras. Pour la découpe et l'analyse, l'échantillon est ainsi placé dans une zone de travail surélevée par rapport au module pivot. La qualité de la découpe et de l'analyse subséquente sera améliorée. Cela limite en outre le risque que le module pivot touche l'analyseur de l'instrument.

Selon un exemple, le module pivot comprend une troisième surface d'appui disposée entre une première et une deuxième surfaces d'appui, la troisième surface d'appui définissant, avec chacune des première et deuxième surfaces d'appui, un angle de basculement secondaire α2, α3. La troisième surface d'appui permet d'obtenir plus de positions angulaires différentes pour les configurations de découpe ou d'analyse, selon les besoins et par exemple pour s'adapter à différentes configurations d'instruments.

Selon un exemple, dans la configuration de découpe, le dispositif est en appui sur l'une parmi la première et la troisième surface d'appui, de préférence la première surface d'appui.

Selon un exemple, dans la configuration d'analyse, le dispositif est en appui sur l'une parmi la troisième et la deuxième surface d'appui, de préférence la deuxième surface d'appui. Lors que dans la configuration de découpe, le dispositif est en appui sur la troisième surface d'appui, dans la configuration d'analyse, le dispositif est en appui sur la deuxième surface d'appui.

Selon un exemple, le module de maintien comprend une pluralité de logements chacun configuré pour accueillir un échantillon. Le dispositif permet ainsi de réaliser plusieurs échantillons en une seule étape de découpe, et notamment lorsque la découpe est faite par GCIB.

Selon un exemple, au moins deux logements de la pluralité de logements présentent une profondeur différente entre eux, de préférence chaque logement de la pluralité de logement présente une profondeur différente entre eux. Le dispositif permet ainsi de réaliser plusieurs échantillons découpés à des profondeurs différentes entre eux, en une seule étape de découpe, et notamment lorsque la découpe est faite par GCIB. L'analyse SIMS subséquente pourra ainsi permettre d'obtenir des données à différentes profondeurs des échantillons.

Selon un exemple, dans la configuration de découpe, le dispositif est configuré de façon à découper l'échantillon à une profondeur différente en différents points de l'échantillon :
- la portion de masquage étant oblique et/ou comprenant des reliefs disposés à des hauteurs différentes entre eux, et/ou
- le logement présentant un fond oblique et/ou comprenant des reliefs disposés à des hauteurs différentes entre eux.

Le dispositif permet ainsi de découper un même échantillon à des profondeurs différentes entre différentes localisations de l'échantillon, et notamment lorsque la découpe est faite par GCIB. L'analyse SIMS subséquente pourra ainsi permettre d'obtenir des données à différentes profondeurs de l'échantillon.

Selon un exemple, le dispositif comprend en outre un organe configuré pour modifier au moins une profondeur du logement et/ou au moins une hauteur de la portion de masquage. La profondeur de coupe de l'échantillon peut ainsi être adaptée selon les besoins.

Selon un exemple, le module pivot présentant une face opposée à chacune des surfaces d'appui, et dans lequel l'organe de basculement est configuré pour exercer alternativement une force sur une desdites faces, de façon à maintenir le dispositif respectivement dans la configuration de découpe et dans la configuration d'analyse. Le basculement entre les configurations de découpe et d'analyse et le maintien du dispositif dans une configuration donnée est ainsi fait de façon simple et robuste, et compatible avec une découpe et une analyse en conditions cryogéniques.

Selon un exemple, l'organe de basculement comprend un moteur configuré pour basculer le dispositif entre la configuration de découpe et la configuration d'analyse. Le basculement entre les configurations de découpe et d'analyse peut ainsi être commandé par un moteur, ce qui peut apporter plus de souplesse dans le réglage du basculement et des positions relatives du dispositif entre la configuration de découpe et la configuration d'analyse.

Selon un exemple, le procédé comprend en outre, préalablement à la découpe de l'échantillon, un refroidissement de l'échantillon à une température inférieure strictement à 0°C, de préférence inférieure ou égale à -140°C. Le procédé met ainsi en œuvre la découpe et de préférence en outre l'analyse subséquente en conditions cryogénique. Le procédé est ainsi particulièrement adapté pour les échantillons biologiques et/ou organiques, notamment en dessous de -140°C.

Selon un exemple, l'échantillon est un échantillon biologique et/ou organique. Dans le cas des échantillons organiques et/ou biologiques on peut abraser rapidement de très grandes zones de façon automatisée (typiquement jusqu'à 800 µm en latéral) et s'affranchir de procédures de préparations difficiles et manuelles (par exemple cryo-ultramicrotomie, cryo-transfert, etc.).

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telles que par exemple l'expression « A agit sur B » qui peut signifier « A agit directement sur B » ou « A agit sur B par l'intermédiaire d'une ou plusieurs autres pièces».

Dans la présente demande de brevet, le terme mobile correspond à un mouvement de rotation ou à un mouvement de translation ou encore à une combinaison de mouvements, par exemple la combinaison d'une rotation et d'une translation.

Dans la présente demande de brevet, lorsque l'on indique que deux pièces sont distinctes, cela signifie que ces pièces sont séparées. Elles peuvent être :
- positionnées à distances l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre, possiblement selon plusieurs degrés de liberté, à l'exclusion de la liberté en translation selon la direction X. Autrement dit, si on déplace une pièce selon la direction X, l'autre pièce effectue le même déplacement.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du dispositif porte-échantillon sur la platine porte-échantillon. Par exemple, les notions « horizontal » et « longitudinal » correspondent à la direction d'extension principale de la surface de la platine porte-échantillon sur laquelle repose le dispositif, ou encore la direction d'extension principale du premier bras du module pivot dans la configuration de découpe.

On utilisera également un repère dont la direction longitudinale ou arrière/avant correspond à l'axe X, la direction transversale ou droite/gauche correspond à l'axe Y et la direction verticale ou bas/haut correspond à l'axe Z.

Aux fins de la présente divulgation, l'expression "A et/ou B" signifie (A), (B), ou (A et B). Aux fins de la présente divulgation, l'expression "A, B et/ou C" signifie (A), (B), (C), (A et B), (A et C), (B et C), ou (A, B et C).

On entend par un paramètre « sensiblement égal/supérieur/inférieur à » une valeur donnée, que ce paramètre est égal/supérieur/inférieur à la valeur donnée, à plus ou moins 10 %, près de cette valeur. On entend par un paramètre « sensiblement compris entre » deux valeurs données que ce paramètre est au minimum égal à la plus petite valeur donnée, à plus ou moins 10 %, près de cette valeur, et au maximum égal à la plus grande valeur donnée, à plus ou moins 10 %, près de cette valeur.

Le dispositif 1, l'instrument 2 et les procédés associés sont maintenant décrits selon plusieurs exemples de réalisation particuliers en référence aux figures.

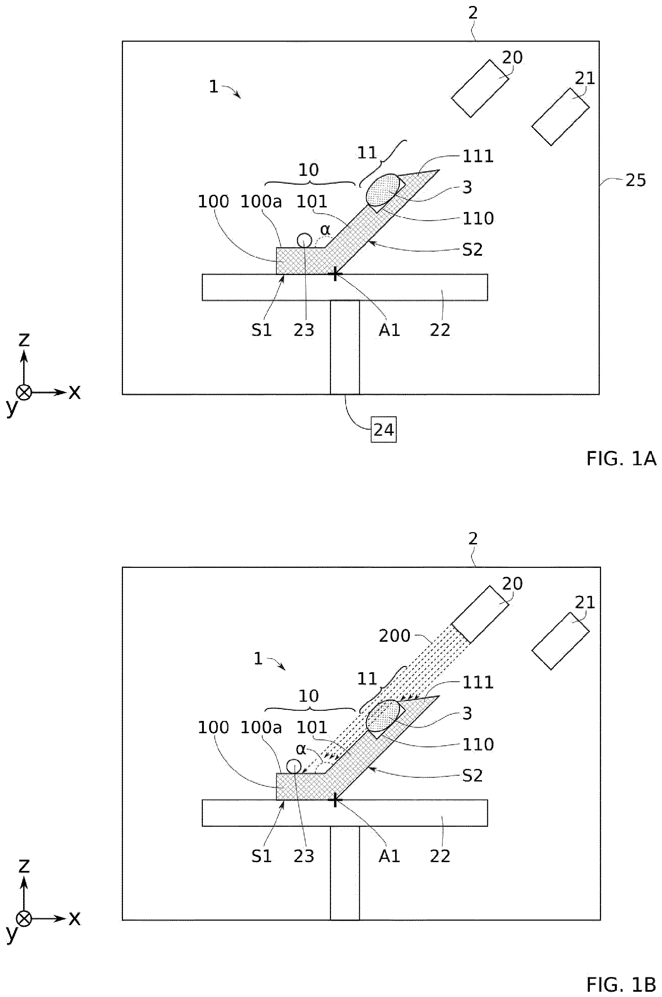

Comme l'illustrent les figures 1A à 1D, l'instrument 2 d'analyse in situ par spectrométrie de masse des ions secondaires comprend typiquement une chambre 25 dans laquelle est disposée une platine 22 porte-échantillon, ci-après désigné platine 22. Dans la suite, on désigne de façon équivalente l'instrument 2 par spectromètre 2.

De façon conventionnelle, la chambre 25 peut comprendre ou être reliée à un canon à faisceaux d'ions 20 configuré pour émettre un faisceau d'ions 200 pour découper l'échantillon 3. De préférence, le canon 20 est un canon à GCIB émettant plus particulièrement un cluster d'ions argon Ar₂₅₀₀⁺. La chambre 25 peut comprendre ou être reliée à un canon 21, configuré pour émettre un faisceau d'ions 210 pour l'analyse SIMS, et plus particulièrement un faisceau d'ions bismuth Bi₃⁺. La chambre 25 prend en outre un analyseur, non représenté sur les figures, configuré pour capter les ions secondaires issus du bombardement de l'échantillon par le faisceau d'ions 210. Le spectromètre 2 est de préférence un spectromètre TOF-SIMS, mais peut être un spectromètre quadropole or à secteur magnétique.

L'échantillon 3 peut ainsi être découpé et analysé in situ c'est-à-dire que la découpe et l'analyse se font dans le spectromètre 2, et plus particulièrement dans la chambre 25 du spectromètre 2. De préférence, l'échantillon 3 n'est pas sorti de la chambre 25 entre la découpe et l'analyse.

La chambre 25, et plus particulièrement la platine 22, peut en outre être reliée à un module de régulation en température 24, et plus particulièrement un module de refroidissement. Le module de refroidissement 24 peut être configuré pour diminuer la température de l'échantillon à une température inférieure strictement à 0°C, et de préférence inférieure ou égale à -140°C. Cela permet d'atteindre des conditions dites « cryogéniques », aussi désignées « cryo » par la suite, pour la découpe et/ou l'analyse in situ de l'échantillon 3.

Réaliser la découpe en conditions cryogéniques est utile car cela minimise localement l'échauffement durant la découpe et donc diminue les dommages causés à l'échantillon 3, à la fois en termes d'effet rideau (aussi désigné en anglais par le terme de curtaining) et de dommages moléculaires pouvant être causés à l'échantillon 3. Les conditions cryo sont d'ailleurs particulièrement adaptées pour rendre des échantillons hydratés, par exemple des échantillons biologiques, compatibles avec un environnement en ultravide comme il est d'usage pour la découpe et l'analyse de l'échantillon.

La platine 22 peut être configurée pour être inclinée par rapport à la direction horizontale X. L'inclinaison de la platine 22 est toutefois généralement limitée en angle, typiquement sur une gamme angulaire de ± 10°. Or, pour une analyse d'échantillon sur une profondeur de coupe importante (par exemple supérieure ou égale à une centaine de µm), il faut réorienter l'échantillon étant donné que l'éjection des ions pour l'analyse TOF-SIMS présente une profondeur de champ limitée. La quantité d'ions récupérée par le spectromètre est aussi augmentée dans la cadre d'un échantillon « mis à plat »

Pour cela, le dispositif 1 de porte-échantillon, ci-après désigné dispositif 1, est disposé sur la platine 22. Le dispositif 1 présente deux configurations :
- une configuration de découpe dans laquelle l'échantillon 3 sur le dispositif 1 est positionné de façon à être découpé par le faisceau d'ions 200, pour former une surface de coupe exposée 3a,
- une configuration d'analyse dans laquelle l'échantillon 3 sur le dispositif 1, une fois l'échantillon découpé, est positionné de sorte que la surface de coupe 3a est exposée au faisceau 210.

Le dispositif 1 comprend un module pivot 10 permettant le passage entre la configuration de découpe et la configuration d'analyse, et un module de maintien 11 sur lequel est disposé l'échantillon 3.

Le module pivot 10 présente au moins deux surfaces d'appui S1 et S2. Ces deux surfaces d'appui définissent au niveau de l'axe de rotation A1, un angle de basculement α pouvant aussi être désigné comme angle de basculement principal α₁. L'axe de rotation A1 est de préférence parallèle à la direction transverse Y. Dans la configuration de découpe, le dispositif 1 peut être en appui sur la première surface d'appui S1. Dans la configuration d'analyse, le dispositif 1 peut être en appui sur la deuxième surface d'appui S2. Le passage de la configuration de découpe à la configuration d'analyse peut être actionné par un organe de basculement 23 disposé dans la chambre 25 du spectromètre 2, induisant une rotation du dispositif autour de l'axe de rotation A1, pour changer de surface d'appui. De préférence, les deux surfaces d'appui S1 et S2 sont au moins en partie, et de préférence entièrement, planes.

Le dispositif 1 comprend en outre un module de maintien comprenant un logement 110 de l'échantillon 3 et une portion de masquage 111 configurée pour masquer en partie l'échantillon 3 disposé dans le logement 110, lors de son exposition au faisceau d'ions 200, et notamment un GCIB 200.

L'échantillon 3 peut être placé sur le dispositif 1, lui-même placé sur la platine 22 du spectromètre 2, comme illustré par la figure 1A. L'échantillon 2 peut être placé dans le logement 110 au plus proche de la portion de masquage 111. L'échantillon 3 peut être fixé dans le logement 110, par exemple par la glace qui se forme à l'interface entre l'échantillon 3 et le dispositif 1 en conditions cryo, ou encore par le biais d'une matière adhésive.

Dans la configuration de découpe, et comme illustré par exemple par la figure 1B, l'échantillon 3 peut être exposé au GCIB 200. Le faisceau GCIB étant par nature plus large et diffus qu'un FIB, la portion de masquage 111 masque une partie de l'échantillon 3 afin de délimiter la surface de coupe 3a qui est formée.

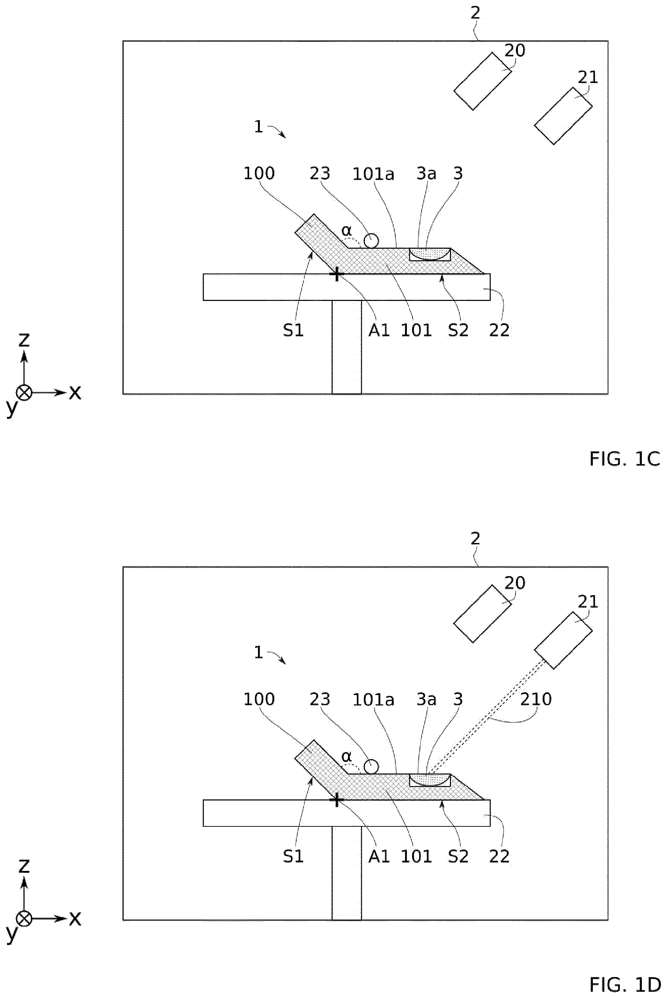

Après la découpe de l'échantillon 3, l'organe de basculement 23 peut être actionné afin de passer à la configuration d'analyse. Le dispositif 1 peut ainsi être basculé pour être mis en appui sur la surface S2, comme l'illustre par exemple la figure 1C. La surface de coupe 3a est ainsi réorientée pour être exposée au faisceau d'ions 210 pour l'analyse SIMS comme l'illustre, par exemple la figure 1D. La position de l'échantillon 3 est donc distincte entre la configuration de découpe et la configuration d'analyse.

Selon les designs instrumentaux, le basculement entre la configuration de découpe et la configuration d'analyse peut être réalisé sous diverses conditions expérimentales, par exemple sous vide, en conditions cryogéniques ou à température ambiante par exemple, et/ou sous atmosphère protégée. Notamment, les conditions expérimentales utilisées lors de la découpe peuvent être maintenues lors du basculement entre la configuration de découpe et la configuration d'analyse, puis de préférence lors de l'analyse.

L'invention est particulièrement adaptée pour réaliser des coupes de grande dimension (par exemple sur au moins une dimension supérieure ou égale à 100 µm). L'invention utilise la différence de vitesse d'abrasion par le faisceau d'ions 200 entre le masque métallique que forme la portion de masquage 111 et l'échantillon 3 pour lesquelles des vitesses de coupe très importantes peuvent être atteintes (jusqu'à 1µm par minute pour un échantillon comprenant des matériaux organiques). La surface de coupe peut présenter au moins une dimension, et notamment selon la direction de propagation du faisceau d'ions 200, sensiblement inférieure ou égale à 300 µm de profondeur, et potentiellement plus.

L'invention est compatible avec des échantillons ayant une forte topologie. Elle est également adaptée aux échantillons biologiques pour lesquels l'analyse cryogénique est avantageuse. Elle est également adaptée aux échantillons comprenant des matériaux organiques.

À titre d'exemples non limitatifs, les applications suivantes peuvent être citées :
- l'étude de la répartition spatiale des lipides dans les graines,
- l'étude TOF-SIMS de différents tissus biologiques (cellules, tissus animaux, tissus végétaux),
- l'étude TOF-SIMS d'échantillons organiques non biologiques, tels que les hydrogels, les polymères, etc.,
- l'étude TOF-SIMS d'échantillons composites organiques et inorganiques, la partie inorganique étant de préférence de dimension inférieure à la partie organique,
- l'étude TOF-SIMS d'échantillons rugueux pour lesquels il serait nécessaire de réaliser au préalable une coupe ou un polissage de la surface.

Entre la découpe et l'analyse, le dispositif 1 n'est de préférence pas sorti de la chambre 25 du spectromètre 2. Le dispositif 1 est mobile entre sa configuration de découpe et sa configuration d'analyse, et de préférence mobile uniquement en rotation autour de l'axe A1. Entre la découpe et l'analyse, le dispositif 1 peut de préférence être déplacé uniquement en rotation autour de l'axe A1. L'actionnement de l'organe de basculement 23 peut être commandé depuis l'extérieur de la chambre 25 du spectromètre 2, par exemple par le biais d'une interface utilisateur ou des moyens mécaniques de contrôle, non représentés sur les figures.

Le module de maintien 11 peut être solidaire du module pivot 10, au moins selon le mouvement en rotation autour de l'axe A1, et de préférence selon tous les degrés de liberté. Le module de maintien 11 peut être d'une seule pièce avec le module pivot 10. Selon un exemple, le module de maintien 11 et le module pivot forment un ensemble monobloc.

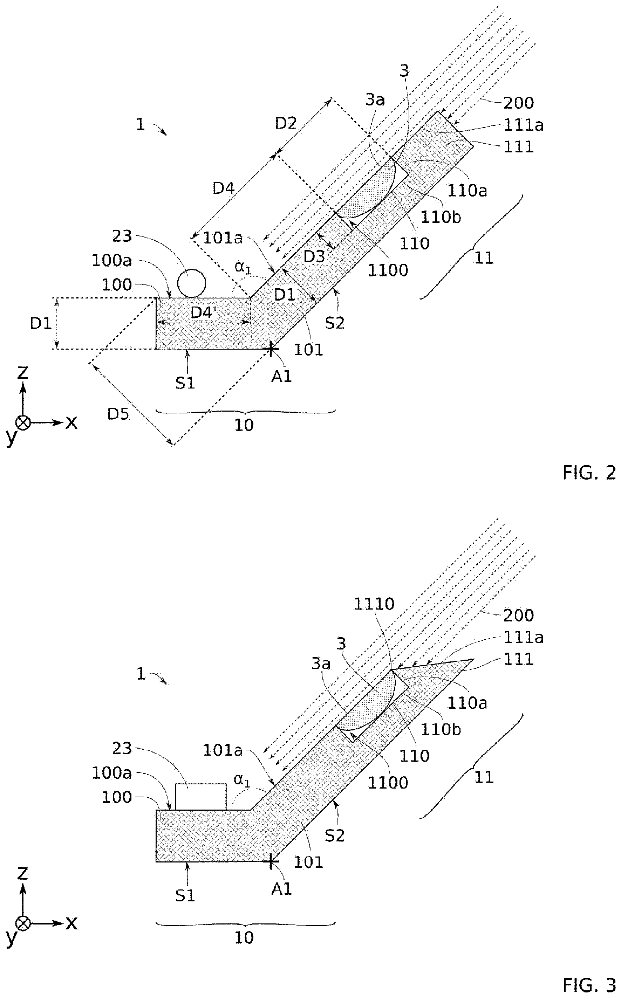

Par exemple, et comme illustré par les figures 2 à 7B par exemple, le module pivot 10 peut comprendre un premier bras 100 et un deuxième bras 101. Le premier bras 100 porte la première surface d'appui S1. Le deuxième bras 101 porte la deuxième surface d'appui S2. Le module de maintien 11 peut être disposé sur le deuxième bras 101, par exemple en étant disposé dans la continuité de celui-ci selon la direction d'extension principale du deuxième bras 101. L'angle de basculement α et de préférence choisi de sorte que le deuxième bras 101 présente une direction d'extension principale sensiblement parallèle à la direction de propagation du faisceau d'ions 200, lorsque le dispositif 1 est dans la configuration de découpe.

L'angle de basculement α est pour cela compris entre 120° et 160°, de préférence entre 125° et 145°, de préférence est sensiblement égal à 135°. De façon équivalente, lorsque le dispositif 1 est dans sa configuration de découpe, la deuxième surface d'appui S2 forme avec le plan horizontal, et par exemple la surface de la platine 22, un angle sensiblement compris entre 20° et 60°, de préférence entre 35° et 55°, et de préférence sensiblement égal à 45°.

Plusieurs solutions peuvent être envisagées pour l'organe de basculement 23. Comme illustré par les figures 2 à 5 par exemple, l'organe de basculement 23 peut être configuré pour exercer une force de maintien en appui sur le dispositif 1. Pour cela, chaque bras 100, 101 peut présenter une face 100a, 101a opposée à la surface d'appui correspondante S1, S2. L'organe de basculement 23 peut être configuré pour exercer une force d'appui sur la face 100a ou 101a selon que le dispositif 1 est dans la configuration de découpe ou d'analyse. L'organe de basculement 23 peut par exemple être un fil métallique en appui sur la face 100a, 101a en question (voir par exemple figure 2), ou encore une patte flexible en appui sur la face 100, 101a en question (voir par exemple figures 3 à 5). Le basculement entre les configurations de découpe et d'analyse peut être fait par déplacement de l'organe de basculement 23 pour être en appui alternativement sur la face 100a ou la face 101a.

En alternative ou en complément, l'organe de basculement 23 peut comprendre un moteur 231 configuré pour entraîner un actionneur 230 induisant le basculement du dispositif 1 entre ses configurations de découpe et d'analyse. Selon cet exemple, l'organe de basculement 23 peut comprendre une roue crantée entraînée par un moteur et un ressort.

Le dispositif 1 est maintenant décrit plus en détail selon différents exemples de réalisation. Comme illustré par les figures 2 à 6, en configuration de découpe, le logement 110 s'étend par exemple selon une première direction sensiblement perpendiculaire à l'axe de rotation A1, et notamment une direction dans le plan XZ. Le logement 110 peut s'étendre selon la première direction, cette direction étant sensiblement parallèle à la direction d'extension principale du deuxième bras ou encore sensiblement parallèle à la deuxième surface d'appui S2. Le logement 110 présente un volume intérieur creux 1100 dans lequel l'échantillon 3 est placé.

La portion de masquage 111 peut être configurée pour masquer en partie le logement 110 selon un plan sensiblement perpendiculaire à cette première direction, ce plan pouvant être sensiblement parallèle à l'axe de rotation A1. La portion de masquage 111 peut être configurée pour masquer tout ou partie de ce volume intérieur 1100. En particulier, la portion de masquage 111 peut former un bord 110a du volume intérieur 1100 du logement 110. On comprend donc que la portion de masquage 111 peut délimiter en partie le logement 110, et notamment selon le plan précisé ci-dessus.

Selon un premier exemple pouvant être illustré par la figure 2, la portion de masquage 111 présente une surface supérieure 111a orientée sensiblement parallèlement à la direction de propagation du faisceau d'ions 200. Dans ce mode de réalisation, le faisceau d'ions 200 peut ioniser en surface la portion de masquage 111 et redéposer le matériau ionisé sur la surface de coupe 3a de l'échantillon 3. Ceci peut être intéressant pour augmenter le signal lors de l'analyse SIMS.

On peut toutefois vouloir éviter une contamination de la surface de coupe 3a par le matériau du dispositif 1. Comme l'illustrent par exemple les figures 3 à 10B, la surface 111a peut-être disposé de façon oblique par rapport au faisceau d'ions 200. La surface 111a peut être non parallèle à la surface d'appui S2, et plus particulièrement former un angle aigu avec celle-ci. Notons qu'il est préférable d'éviter un angle trop petit entre la surface 111 a et la surface d'appui S2, pour limiter les risques d'arc électrique lors de l'analyse SIMS. La surface 111a forme ainsi une arête 1110.

La portion de masquage 111 peut être configurée pour définir une portion apparente de l'échantillon 3, et une portion masquée de l'échantillon 3, l'arête 1110 délimitant à elle seule la portion apparente et la portion masquée de l'échantillon 3. De préférence, l'arête 1110 est plane, de préférence entièrement plane ou formée de plusieurs portions planes. La planéité de l'arête 1110 améliore la qualité de la surface de coupe 3a obtenue, et limite les effets dits de « rideau » à la surface 3a de l'échantillon 3 (c'est-à-dire que l'échantillon 3a présente en surface des reliefs typiquement conséquents à des défauts de planéité ou une rugosité trop importante de la portion de masquage 111).

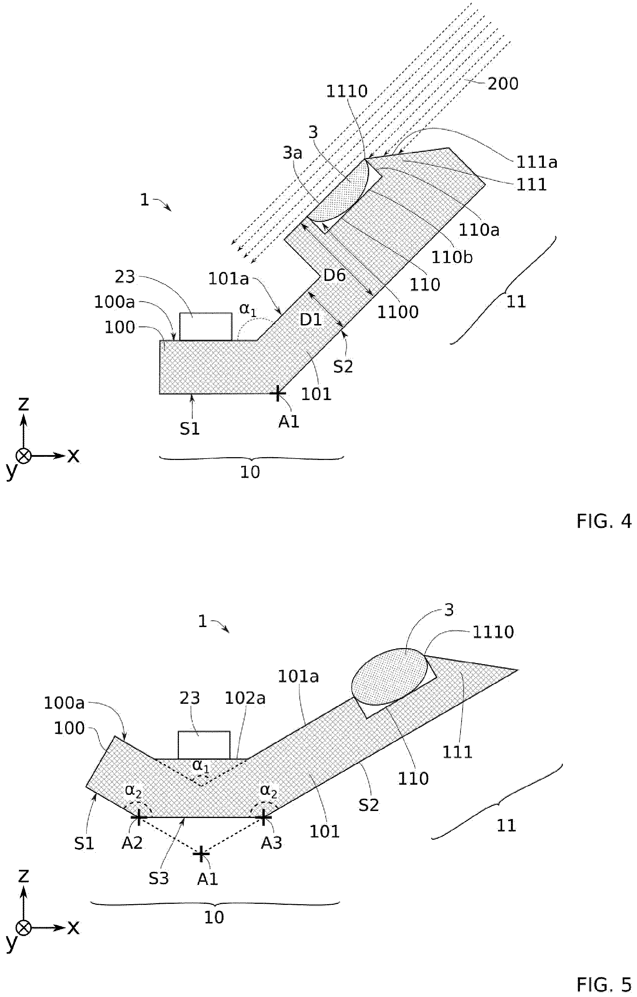

Comme l'illustre par exemple la figure 4, le module de maintien 11 peut être configuré de sorte que le logement 110 et la portion de masquage 111 sont surélevés par rapport au deuxième bras 101, et notamment par rapport à la face 101a du deuxième bras 101, opposée à la deuxième surface d'appui S2. Autrement dit, le deuxième bras 101 peut présenter une épaisseur D1 strictement inférieure à la distance D6 s'étendant depuis la surface d'appui jusqu'à l'ouverture du logement 110 et le cas échéant l'arête 1110. La zone de travail est ainsi surélevée par rapport au module pivot 10. Par exemple, la distance D6 est supérieure ou égale à 1,5*D1, de préférence supérieure ou égale à 2*D1.

Le module pivot 10 peut être configuré de façon à pouvoir être basculé selon un nombre d'angles de basculement α strictement supérieur à 2. Le réglage de l'angle de basculement, permet de réaliser une pseudo-tomographie en abrasant puis imageant un secteur angulaire donné.

Comme l'illustre par exemple la figure 5, le module pivot 10 peut comprendre au moins une troisième surface d'appui S3 disposé entre les surfaces d'appui S1 et S2. La troisième surface d'appui S3 définit, avec chacune des première S1 et deuxième S2 surfaces d'appui, un angle de basculement secondaire α2, α3. Les angles de basculement secondaire α2, α3 peuvent être égaux ou non entre eux. La surface d'appui S3 peut servir de surface d'appui dans l'une ou l'autre des configurations d'analyse et de découpe. Par exemple, lorsque le dispositif 1 est en appui sur la première surface d'appui S1 dans la configuration de découpe, le dispositif 1 peut être placé dans la configuration d'analyse en appui sur la deuxième surface d'appui S2 ou la troisième surface d'appui S3. Le dispositif 1 peut être en appui sur la troisième surface d'appui S3 dans la configuration de découpe, le dispositif 1 peut alors être placé dans la configuration d'analyse en appui sur la deuxième surface d'appui S2. On comprend donc que la troisième surface d'appui S3 offre une plus grande modularité d'angle du dispositif 1. Une face 102a peut être opposée à la troisième surface d'appui S3, par exemple pour une mise en appui de l'organe de basculement 23 sur cette face 102a. La surface d'appui S3 peut être au moins en partie, et de présence entièrement, plane. Des surfaces additionnelles à la troisième surface S3 peuvent être ajoutées, de façon à générer des surfaces d'appui additionnelles entre les surfaces S1 et S2.

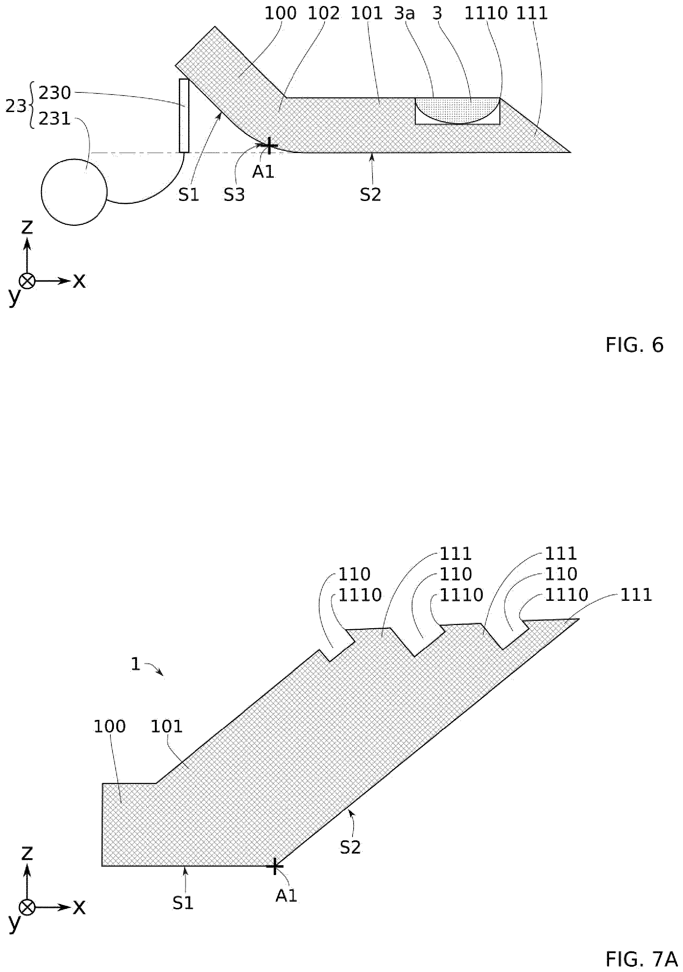

Comme l'illustre par exemple la figure 6, la troisième surface d'appui S3 peut être courbe entre la première surface d'appui S1 et la deuxième surface d'appui S2. Ainsi, et de façon synergique avec un basculement du dispositif 1 actionné par un moteur 231, le positionnement du dispositif 1 dans les configurations de découpe et d'analyse peut être choisi pour tout angle compris dans une gamme délimitée par les positions d'appui sur les surfaces S1 et S2.

Des exemples de dimensions sont maintenant donnés à titre d'exemples non limitatifs en référence à la figure 2.

Au moins un parmi les premier 100 et deuxième 101 bras peuvent présenter une épaisseur D1, prise selon la normale à la surface d'appui correspondante, sensiblement comprise entre 1 et 5 mm. Les premier 100 et deuxième 101 bras peuvent présenter une même épaisseur D1.

Le logement 110 peut s'étendre, selon la direction de propagation du faisceau d'ions 200, sur une distance D2 sensiblement comprise entre 0,5 et 4 mm. La distance D2 peut être choisie en fonction de la dimension de l'échantillon 3 et/ou de la profondeur de coupe réalisée. De préférence la distance D2 est limitée à cette valeur maximum afin de limiter le temps de découpe et l'effet rideau pouvant survenir à la surface de coupe 3a de l'échantillon 3.

Le logement peut présenter une profondeur D3, prise selon la normale à la deuxième surface d'appui S2, sensiblement comprise entre 1 µm et 1 mm, de préférence sensiblement égale à 150 µm. Cette profondeur peut être choisie en fonction de la dimension de l'échantillon 3. Notons que, comme décrit plus en détail ultérieurement, cette profondeur D3 peut en outre être réglable.

L'envergure de rotation du dispositif 1 peut être décrite par les distances D4, s'étendant depuis la jonction entre le premier 100 et deuxième 101 bras jusqu'au logement 110, et D4' correspondant à la longueur du premier bras 100. Ces dimensions sont de préférence suffisamment grandes pour assurer le maintien par l'organe de basculement 23, et notamment lorsque l'organe de basculement 23 applique une force alternativement sur les faces 100a, 101a et le cas échéant 102a, sans risquer de toucher l'échantillon 3. Pour cela, les distances D4 et D4' sont sensiblement supérieures ou égales à 2 mm. Notons que D4 et D4' sont de préférence mais non nécessairement égale entre elles. Dans le cas d'une rotation dispositif 1 actionnée par un moteur 231, ces dimensions peuvent être inférieures.

Le premier bras 100 peut présenter une hauteur totale D5, prise entre la surface d'appui S2 et le point le plus haut du premier bras 100 lorsque le dispositif est en appui sur la surface d'appui S2, sensiblement inférieure ou égale à 4 mm. Le risque de toucher l'analyseur avec le dispositif 1 lors de l'analyse SIMS est ainsi limité.

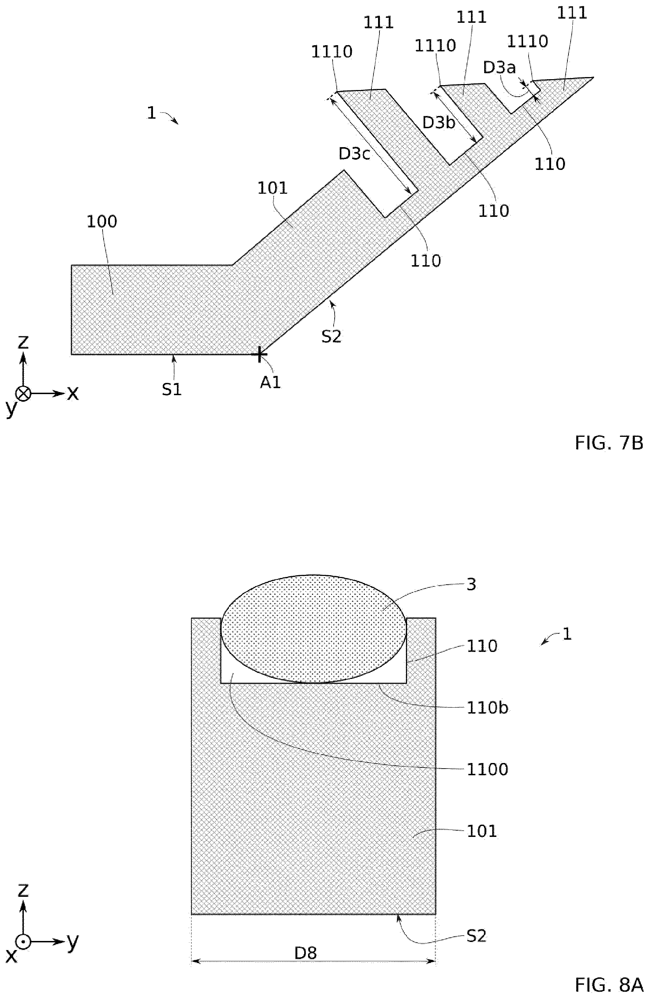

Le dispositif 1 peut en outre présenter une largeur D8, prise selon la direction Y (illustrée par exemple en figure 8A), sensiblement comprise entre 2 mm et 20 mm. Cela permet de placer plusieurs échantillons 3 côte à côte dans un ou plusieurs logements 110 ou de découper un échantillon 3 présentant une largeur importante.

Comme illustré par exemple par les figures 7A et 7B, le dispositif 1 peut comprendre plusieurs logements 110, chacun destiné à accueillir un échantillon 3. Selon les exemples illustrés, ces logements 110 sont de préférence au moins en partie alignés selon la direction de propagation du faisceau d'ions 200, ou de façon équivalente selon la direction d'extension principale du premier bras 101. On peut prévoir, en alternative ou en complément, que des logements soient au moins en partie alignés selon la direction transverse Y. L'étape de découpe de l'échantillon peut ainsi être mutualisée pour plusieurs échantillons 3, et notamment précéder l'analyse de chaque échantillon. Chaque logement 110 peut présenter sa propre portion de masquage 111 et plus particulièrement sa propre arête 1110.

Comme l'illustre par exemple en figure 7A, ces logements peuvent présenter une profondeur sensiblement égale entre eux. Plusieurs échantillons avec une même profondeur de coupe peuvent ainsi être réalisés en parallèle. De façon alternative, et comme illustré par exemple par la figure 7B, au moins deux de ces logements 110, et de préférence chaque logement 110, peut présenter une profondeur D3a, D3b, D3c différente. Ainsi plusieurs échantillons avec différentes profondeurs de coupe peuvent être réalisés en parallèle.

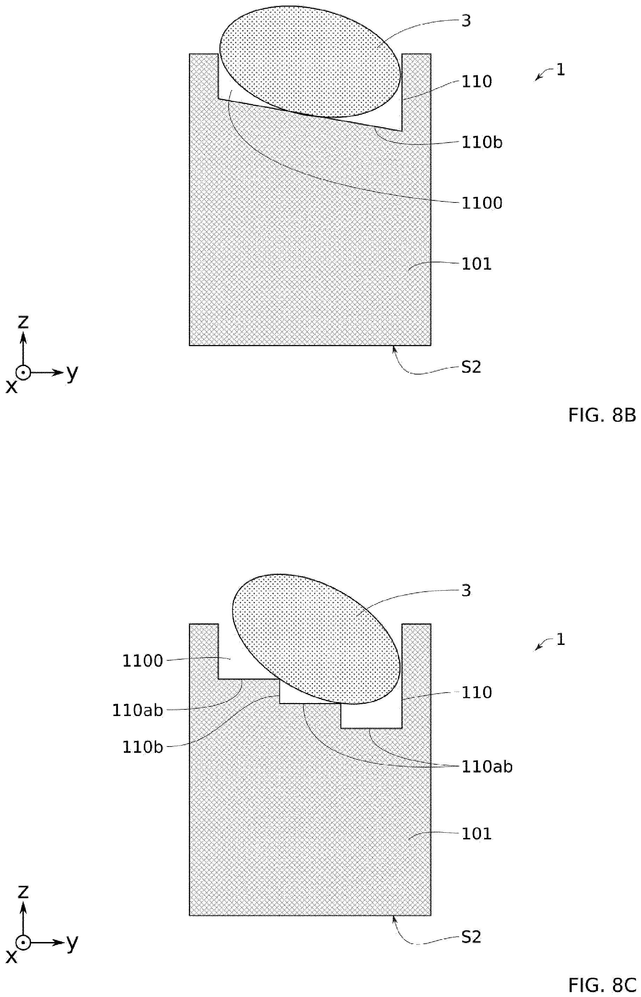

Le dispositif 1 peut être configuré de façon à découper l'échantillon 3 à une profondeur différente en différents endroits d'un même échantillon 3. Les figures 8A à 8C décrivent plusieurs exemples de réalisation du logement 110. Le volume intérieur 1100 du logement 110 peut être en partie délimite par un fond 110b. Le fond 110b du logement 110 peut être sensiblement parallèle à la deuxième surface d'appui S2 selon la direction transverse Y (Figure 8A). La profondeur de coupe pourra être la même en différents points de l'échantillon 3. De façon alternative, le fond 110b peut être au moins en partie oblique à la deuxième surface d'appui S2 selon la direction transverse Y (Figure 8B). Selon un autre exemple, le fond 110b peut présenter des reliefs 110ab disposés à des hauteurs, selon la direction Z, différentes entre eux (Figure 8C). Ces reliefs 110ab peuvent être juxtaposés selon la direction transverse Y. Autrement dit, le fond 110b peut présenter plusieurs portions juxtaposées selon la direction transverse Y, chaque portion présentant une profondeur D3 différente entre elles. Selon ces deux derniers exemples, l'échantillon 3 est ainsi disposé de façon oblique par rapport à la direction transverse Y, ce qui permet d'obtenir différentes profondeurs de coupe en différents points de l'échantillon 3.

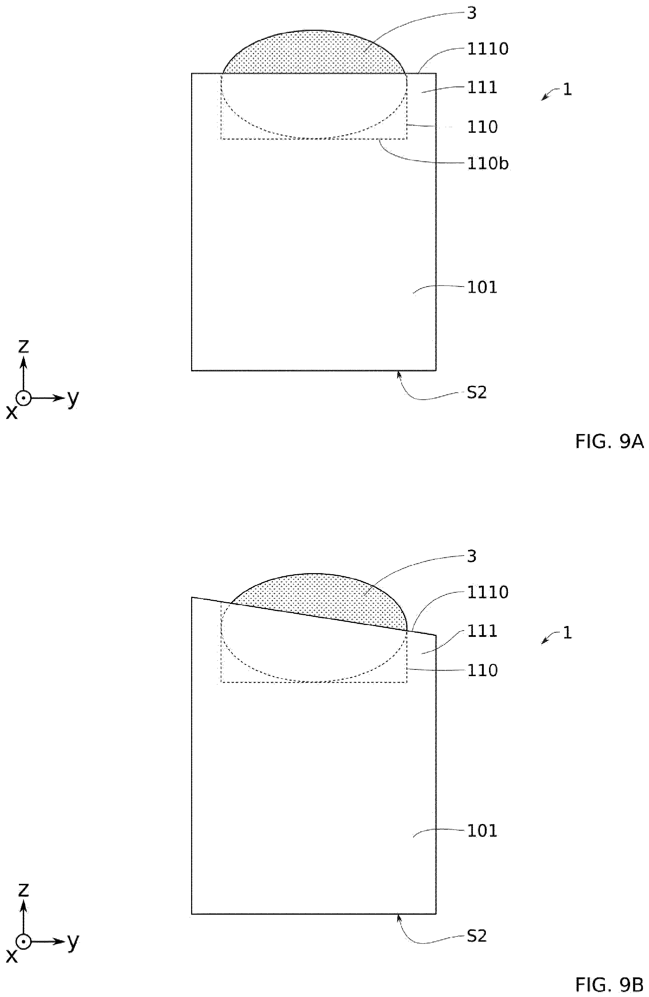

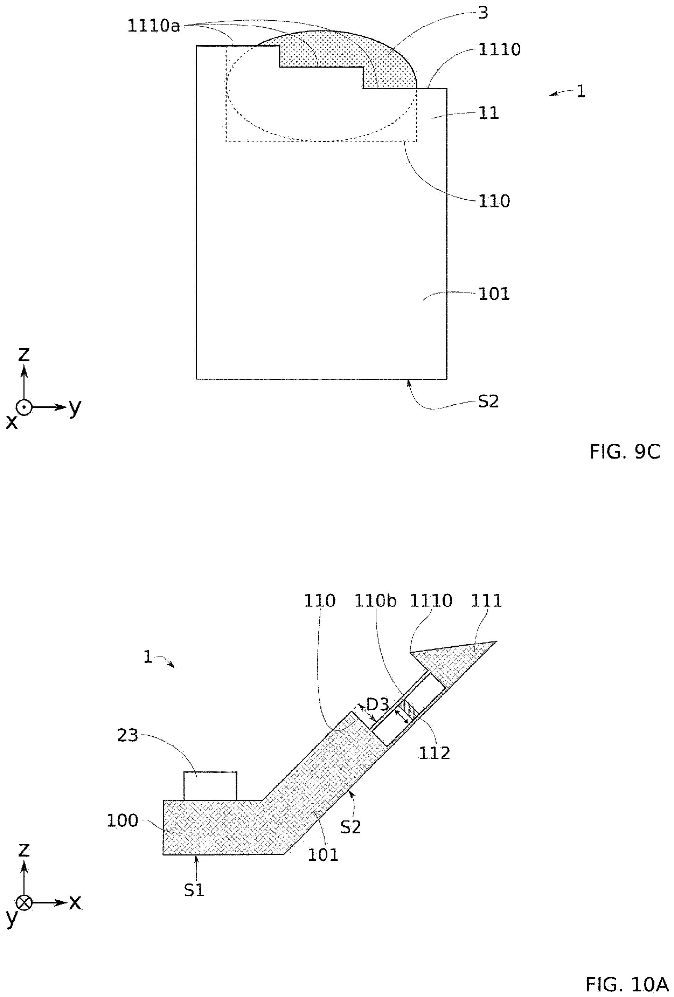

La portion de masquage 111, et plus particulièrement l'arête 1110 peut, en alternative ou en complément, être configurée de façon à induire une découpe de l'échantillon 3 à une profondeur différente en différents endroit d'un même échantillon 3. Les figures 9A à 9C décrivent plusieurs exemples de réalisation de la portion de masquage 111, et plus particulièrement de l'arête 1110. Dans la suite on considère à titre non limitatif l'arête 1110. Les caractéristiques décrites peuvent néanmoins s'appliquer à la surface supérieure 111a de la portion de masquage 111. L'arête 1110 peut être sensiblement parallèle à la deuxième surface d'appui S2 selon la direction transverse Y (Figure 9A). La profondeur de coupe pourra être la même en différents points de l'échantillon 3. De façon alternative, l'arête 1110 peut être au moins en partie oblique à la deuxième surface d'appui S2 selon la direction transverse Y (Figure 9B). Selon un autre exemple, l'arête 1110 peut présenter des reliefs 1110a disposés à des hauteurs, selon la direction Z, différentes entre eux (Figure 9C). Ces reliefs 1110a peuvent être juxtaposés selon la direction transverse Y. Autrement dit, l'arête 1110 peut présenter plusieurs portions juxtaposées selon la direction transverse Y, c'est portion formant un profil en créneau. Selon ces deux derniers exemples, le faisceau d'ions 200 va découper l'échantillon 3 à plusieurs profondeurs exposées au faisceau 200.

Notons que dans les figures 8A à 9C, le logement 110 est délimité latéralement selon la direction transverse Y. On peut prévoir que le logement 110 n'est pas délimité selon la direction transverse Y, et notamment lorsque l'échantillon 3 est destiné à être fixé dans le logement comme décrit précédemment.

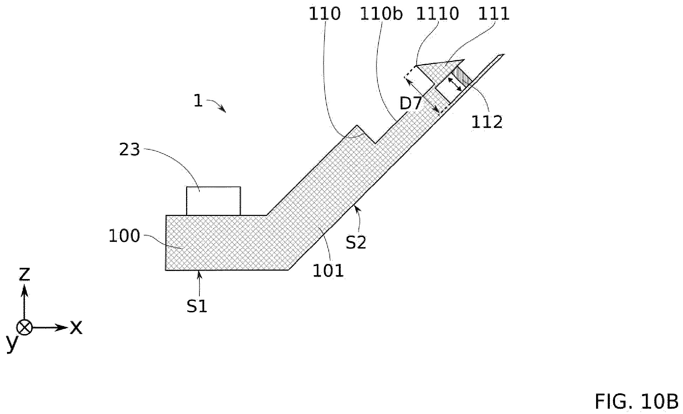

Comme illustré par exemple par les figures 10A et 10B, le module de maintien 110 peut être configuré de façon à régler la portion de l'échantillon 3 qui sera masqué au faisceau d'ions 200. Pour cela, la profondeur D3 du logement 110 peut être réglée et/ou la hauteur D7 de la portion masquage, et notamment de l'arête 1110, peuvent être réglées. Comme l'illustre par exemple la figure 10A, le dispositif 1 peut comprendre un organe 112 configuré pour régler la profondeur D3 du logement 110. Pour cela, l'organe 112 peut être configuré pour déplacer le fond 110b du logement 110 selon la normale à la deuxième surface d'appui S2. Comme l'illustre par exemple la figure 10B, le dispositif 1 peut comprendre, en alternative ou en complément, un organe 112 configuré pour régler la hauteur D7 de l'arête 1110. Pour cela, l'organe 112 peut être configuré pour déplacer la portion de masquage 111 selon la normale à la deuxième surface d'appui S2. L'organe 112 peut par exemple être un dispositif micrométrique, par exemple une vis micrométrique, ou un ressort.

Le dispositif 1 peut être réutilisé sur plusieurs cycles de découpe puis d'analyse. Selon un exemple, le dispositif 1 est fait de métal. Le dispositif 1 peut ainsi résister à un faisceau d'ions GCIB.

La fabrication du dispositif 1 peut comprendre les étapes suivantes. Une pièce, par exemple une pièce métallique, peut être usinée. L'usinage peut être fait par électroérosion. L'usinage peut être configuré pour former les deux bras 100, 101 et le logement 110. L'angle de basculement, et le cas échéant les angles de basculement secondaires, peuvent être choisis à façon préalablement à l'usinage, et notamment selon la configuration de l'instrument 2. On s'affranchit ainsi des contraintes posées par la géométrie du spectromètre 2.

La face supérieure du module de maintien 10 peut ensuite être polie pour améliorer la qualité de la surface obtenue, qui sera exposée au faisceau d'ions 200. La profondeur D3 du logement 110 peut en outre être ajustée de façon précise.

Le procédé de fabrication peut ensuite comprendre un usinage de l'arête au plasma-FIB.

Le procédé de fabrication peut en outre comprendre une découpe du premier bras 100 du dispositif 1, par exemple avec une scie à fil, pour limiter la distance D5 (voir Figure 2).

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

## Revendications

1. **Dispositif** (1) de porte-échantillon pour découpe d'au moins un échantillon (3) par un faisceau d'ions (200) et analyse in situ par spectrométrie de masse des ions secondaires, présentant une première configuration dite « de découpe » dans laquelle l'échantillon (3) est destiné à être dans une première position, et une deuxième configuration dite « d'analyse » dans laquelle l'échantillon (3) est destiné à être dans une deuxième position, la première position étant distincte de la deuxième position, le dispositif (1) étant configuré de façon à entrainer en rotation l'échantillon (3) entre la première position et la deuxième position lors du passage entre la configuration de découpe et la configuration d'analyse,
le dispositif (1) étant **caractérisé en ce qu'**il comprend :
• un module pivot (10) comprenant au moins deux surfaces d'appui (S1, S2, S3) définissant entre elles, au niveau d'un axe de rotation (A1), un angle de basculement α, le dispositif étant en appui sur une (S1, S3) desdites surfaces d'appui dans la configuration de découpe, et le dispositif étant en appui sur une autre (S3, S2) desdites surfaces d'appui dans la configuration d'analyse, le dispositif (3) étant configuré pour être basculé en rotation autour de l'axe de rotation (A1) lors du passage entre la configuration de découpe et la configuration d'analyse,
• un module de maintien (11) comprenant :
∘ un logement (110) configuré pour accueillir l'échantillon (3),
∘ une portion de masquage (111) configurée pour, dans la configuration de découpe, masquer en partie l'échantillon (3) au faisceau d'ions (200), lorsque l'échantillon (3) est disposé dans le logement (110).

2. Dispositif (1) selon la revendication précédente, dans lequel, dans la configuration de découpe, la portion de masquage (111) comprend au moins une surface (111a) destinée à être disposée de façon oblique par rapport au faisceau d'ions (200) pour délimiter au moins une arête (1110) masquant en partie l'échantillon (3) au faisceau d'ions (200).

3. Dispositif (1) selon l'une quelconque des revendications précédentes, dans lequel l'angle de basculement α est compris entre 120° et 160°.

4. Dispositif (1) selon l'une quelconque des revendications précédentes, dans lequel le module pivot (10) comprend un premier bras (100) comprenant une première surface d'appui (S1) et un deuxième bras (101) comprenant une deuxième surface d'appui (S2), et dans lequel le module de maintien (11) est disposé sur le deuxième bras (101), le module de maintien (11) étant en outre configuré de sorte que le logement (110) et la portion de masquage (111) sont surélevés par rapport au deuxième bras (101).

5. Dispositif (1) selon l'une quelconque des revendications précédentes, dans lequel le module pivot (10) comprend une troisième surface d'appui (S3) disposée entre une première (S1) et une deuxième (S2) surfaces d'appui, la troisième surface d'appui (S3) définissant, avec chacune des première (S1) et deuxième (S2) surfaces d'appui, un angle de basculement secondaire α2, α3.

6. Dispositif (3) selon l'une quelconque des revendications précédentes, dans lequel le module de maintien (11) comprend une pluralité de logements (110) chacun configuré pour accueillir un échantillon (3).

7. Dispositif selon la revendication précédente, dans lequel au moins deux logements (110) de la pluralité de logements (110) présentent une profondeur (D3) différente entre eux.

8. Dispositif (1) selon l'une quelconque des revendications précédentes, dans lequel, dans la configuration de découpe, le dispositif (1) est configuré de façon à découper l'échantillon (3) à une profondeur différente en différents points de l'échantillon (3) :
• la portion de masquage (111) étant oblique et/ou comprenant des reliefs (1110a) disposés à des hauteurs différentes entre eux, et/ou
• le logement (110) présentant un fond oblique (110b) et/ou comprenant des reliefs (110ab) disposés à des hauteurs différentes entre eux.

9. Dispositif (1) selon l'une quelconque des revendications précédentes, comprenant en outre un organe (112) configuré pour modifier au moins une profondeur (D3) du logement (110) et/ou au moins une hauteur (D7) de la portion de masquage (111).

10. Instrument (2) d'analyse in situ par spectrométrie de masse des ions secondaires comprenant un canon à faisceau d'ions (20), l'instrument comprenant en outre :
• une platine (22) porte-échantillon,
• le dispositif (1) porte-échantillon selon l'une quelconque des revendications précédentes, disposé sur la platine (22) porte-échantillon,
• un organe dit de basculement (23), configuré pour basculer le dispositif (1) porte-échantillon entre la configuration de découpe et la configuration d'analyse.

11. Instrument (2) selon la revendication précédente, dans lequel le module pivot (10) présentant une face opposée (100a, 101a, 102a) à chacune des surfaces d'appui (S1, S2, S3), et dans lequel l'organe de basculement (23) est configuré pour exercer alternativement une force sur une desdites faces (100a, 101a, 102a), de façon à maintenir le dispositif (1) respectivement dans la configuration de découpe et dans la configuration d'analyse.

12. Instrument (2) selon la revendication 10, dans lequel l'organe de basculement (23) comprend un moteur (231) configuré pour basculer le dispositif (1) entre la configuration de découpe et la configuration d'analyse.

13. Procédé de découpe et d'analyse in situ par spectrométrie de masse des ions secondaires d'un échantillon (3), comprenant :
• une disposition d'un échantillon (3) dans un dispositif (1) de porte-échantillon comprenant un module de maintien (11), le module de maintien (11) comprenant un logement (110) configuré pour accueillir l'échantillon (3),
• le dispositif (1) comprenant un module pivot (10) comprenant au moins deux surfaces d'appui (S1, S2, S3) définissant entre elles, au niveau d'un axe de rotation (A1), un angle de basculement α, une disposition du dispositif (1) logeant l'échantillon (3) sur la platine (22) porte-échantillon d'un instrument (2) d'analyse in situ par spectrométrie de masse des ions secondaires, de sorte que le dispositif (1) est dans une première configuration dite de découpe dans laquelle le dispositif en appui sur une (S1, S3) desdites surfaces d'appui,
• dans la configuration de découpe, une découpe de l'échantillon (3) par un faisceau d'ions (200), dans laquelle l'échantillon (3) dans le logement (110) est en partie masqué au faisceau d'ions (200) par une portion de masquage (111) du module de maintien (11), de façon à exposer après découpe une surface en coupe (3a) de l'échantillon (3),
• un passage du dispositif (1) de la configuration de découpe à une deuxième configuration dite d'analyse, par rotation du dispositif (1) autour de l'axe de rotation (A1) de façon à mettre en appui le dispositif (1) sur une autre (S2, S3) desdites surfaces d'appui,
• une analyse par spectrométrie de masse des ions secondaires de la surface en coupe (3a) exposée de l'échantillon.

14. Procédé selon la revendication précédente, comprenant en outre, préalablement à la découpe de l'échantillon (3), un refroidissement de l'échantillon (3) à une température inférieure ou égale à -140°C.

15. Procédé selon l'une quelconque des deux revendications précédentes, dans lequel l'échantillon (3) est un échantillon (3) biologique et/ou organique.
